# EUROPEAN PATENT SPECIFICATION

(11) **EP 2 818 339 B1**
(45) Date of publication and mention of the grant of the patent: **19.10.2016**
(21) Application number: 14168575.0
(22) Date of filing: 16.05.2014
(51) Int. Cl.: B60C 23/04

(54) **System and method for automatic location assignment of wheels equipped with pressure sensors**
System und Verfahren zur automatischen Positionszuweisung von Rädern mit Drucksensoren
Système et procédé d'attribution de localisation automatique des roues munies de capteurs de pression

(30) Priority: 24.06.2013 US 201313925180
(43) Date of publication of application: 31.12.2014
(73) Proprietor: Delphi Technologies, Inc., Troy MI 48007 (US)
(72) Inventor: Hawes, Kevin J., Greentown, IN Indiana 46936 (US); Ruppel, Christopher D., Carmel, IN Indiana 46033 (US); Oman, Todd P., Greentown, IN Indiana 46936 (US)
(74) Representative: Delphi France SAS

(56) References cited:
- WO-A1-2009/070067
- US-A1- 2003 030 553
- US-A1- 2006 001 533

## Description

### TECHNICAL FIELD OF INVENTION

This disclosure generally relates to tire pressure monitor systems, and more particularly relates to determining wheel locations of wheels equipped with pressure sensors based on a comparison of variations of the pressure values that occur while the vehicle is being operated.

### BACKGROUND OF INVENTION

Some vehicles are equipped with tire pressure monitor systems. These systems typically indicate tire pressure for a wheel at a particular wheel position or wheel location. For example, the system individually indicates the tire pressure for the right front (RF), the right rear (RR), the left-front (LF), and the left-rear (LR) wheel locations. Some systems require action on the part of a service technician or vehicle owner to re-program the wheel locations if the locations of the wheels are changed. Various ways for a system to automatically learn or self-train the wheel locations have been proposed, some of which require the undesirable addition of costly hardware. The problems with various prior attempts to auto-learn wheel locations are documented; see US6731205 to Schofield et al. issued May 4, 2004 which describes a self training tire pressure monitoring system; US6888446 to Nantz et al. issued May 3, 2005; US7425892 to Mori et al. issued September 16, 2008; and US2012/0919831 by Maehara et al. published December 20, 2012. PCT Patent Application no WO2009/070067 describes a method of identifying positions of wheel modules.US Patent Application US2006/001533 desscribes a tire pressure monitoring system according to the preamble of claim 1.

### SUMMARY OF THE INVENTION

In accordance with one embodiment, a method of operating a tire pressure monitor system on a vehicle to determine a wheel location of wheels equipped with pressure sensors is provided. The method includes the step of equipping a plurality of wheels with a pressure sensor. The method also includes the step of determining a plurality of pressure values from each pressure sensor. The method also includes the step of detecting a variation of the pressure values from a plurality of pressure sensors. The method also includes the step of determining a wheel location based on a comparison of the variations of the pressure values.
The step of detecting a variation of the pressure values may include detecting a pressure change greater than a pressure threshold. The step of determining the wheel location may include indicating a front location for a first wheel and indicating a back location for a second wheel when a first variation of pressure values is determined for the first wheel and second variation of pressure values is determined for the second wheel. The first variation and the second variation may have similar polarities, and the second variation may occur a time interval T1 after the first variation. The time interval T1 may be proportional to a ratio of a wheelbase of the vehicle to a speed of the vehicle. The step of determining the wheel location may include indicating a right location for a first wheel and a left location for a third wheel when a first variation of pressure values is determined for the first wheel and third variation of pressure values is determined for the third wheel. The first variation and the third variation may have opposite polarities. The first wheel and the third wheel may be both indicated as one of a front location and a back location if the first variation and the third variation occur at substantially the same time. The method may further comprise a step of detecting a dynamic action of the vehicle. The dynamic action may include one of steering, acceleration, and braking. The dynamic action may be detected by an accelerometer configured to detect longitudinal acceleration and lateral acceleration of the vehicle. The step of detecting a variation of the pressure values may be initiated when a dynamic action is detected. The step of determining the wheel location may be further based on the dynamic action.

In another embodiment, a tire pressure monitor system on a vehicle configured to determine a wheel location of wheels equipped with pressure sensors is provided. The system includes a plurality of wheels equipped with a pressure sensor. The system is configured to determine a plurality of pressure values from each pressure sensor, detect a variation of the pressure values, and determine a wheel location based on a comparison of the variations of the pressure values.
Each pressure sensor may be connected to a processor configured to receive the plurality of pressure values from the pressure sensor, detect a variation of the pressure values, and transmit a variation signal indicative of the variation of the pressure values. The system may further comprise a controller configured to receive the variation signal from each processor, and determine a wheel location based on a comparison of the variation signals. Each pressure sensor may be connected to a transmitter configured to transmit a pressure signal indicative of the plurality of pressure values from the pressure sensor. The system may further comprise a controller configured to receive a pressure signal from each transmitter, detect a variation of the pressure values, and determine a wheel location based on a comparison of the variations. Each pressure sensor may be configured to operate at an increased data rate when the system determines the wheel location. A wheel may be equipped with a centrifugal accelerometer configured to detect rotation of the wheel. The system may be configured to determine a plurality of pressure values from each pressure sensor when the centrifugal accelerometer indicates that the wheel is rotating at a rate greater than a rotation rate threshold. The system may further comprise a linear accelerometer configured to detect longitudinal acceleration and lateral acceleration of the vehicle. The system may be configured to determine the wheel location when the linear accelerometer detects a dynamic action of the vehicle. The dynamic action includes one of steering, acceleration, and braking. The controller may be further configured to detect one of a gear selection, a change in steering angle, an activation of brakes of the vehicle, and a change in speed of the vehicle.

In another embodiment, a controller for a tire pressure monitor system on a vehicle configured to determine a wheel location of wheels equipped with pressure sensors is provided. The system includes a plurality of wheels equipped with a pressure sensor. The controller includes a processor configured to determine a wheel location based on a comparison of variations of pressure values from each pressure sensor.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a view of a vehicle equipped with a tire pressure monitor system in accordance with one embodiment;
Fig. 2 is block diagram of the system of Fig. 1 in accordance with one embodiment;
Fig. 3 is an illustration of signals present in the system of Fig. 1 in accordance with one embodiment;
Fig. 4 is an illustration of signals present in the system of Fig. 1 in accordance with one embodiment;
Fig. 5 is a flowchart of a method practiced by the system of Fig. 2 in accordance with one embodiment;
Fig. 6 is further details of the method of Fig. 5 in accordance with one embodiment;
Figs. 7A and 7B combined are further details of the method of Fig. 5 in accordance with one embodiment; and
Fig. 8 is further details of the method of Fig. 5 in accordance with one embodiment.

### DETAILED DESCRIPTION

Described herein is a tire pressure monitor system and method that uses variation or fluctuations of tire pressure to determine the location (e.g. - right front (RF), the right rear (RR), the left-front (LF), and the left-rear (LR)) of a wheel on a vehicle. In general, suitable variations of tire pressure are transient in nature, typically caused by the vehicle turning or the vehicle driving over some irregularity in the roadway. The variations are analyzed, and a comparison of these pressure variations from one wheel to the other is used to determine wheel location. As such, the wheel location can be determined by the system without manual programming or other intervention by a service technician or owner of the vehicle, i.e. the system has an automatic wheel location assignment feature. The system and method overcome a long standing problem of automating the learning of the wheel location without adding undesirable expense to the vehicle, and avoids potential human error since manual assignment of the wheel location is avoided. While the system and method described herein are presented by way of examples for a four wheeled vehicle, it is recognized that the system and method may be used for other vehicles with greater than or less than four wheels. For example, the wheel location may be determined on a two-wheeled or three-wheeled motorcycle, or on automobile fitted with a spare tire that does not have include a pressure sensor, or a more than four-wheeled vehicle such a large truck or bus.

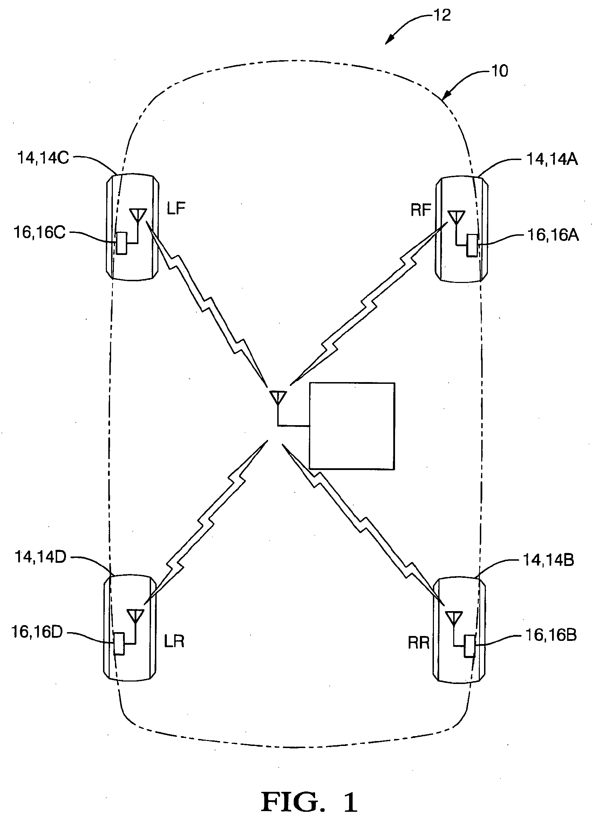

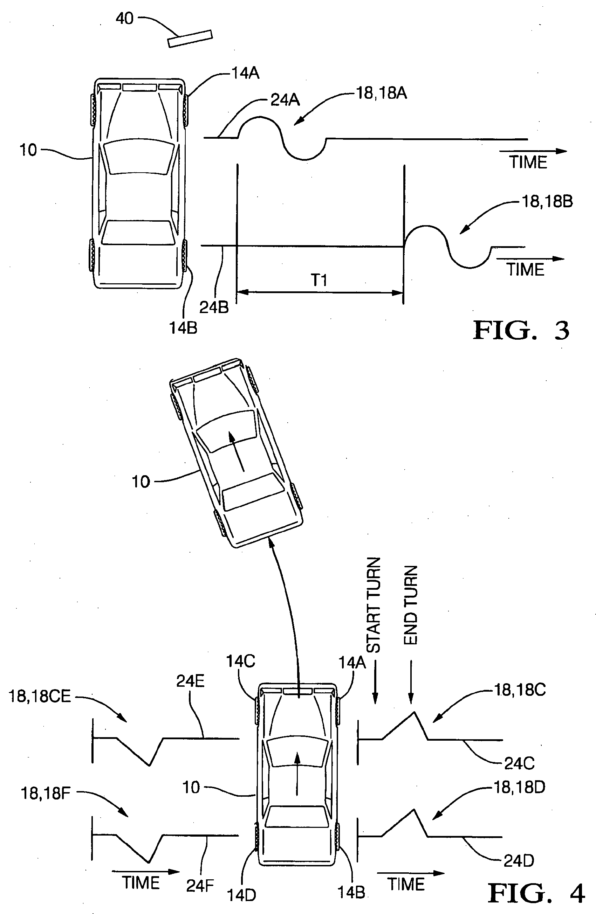

Fig. 1 illustrates a non-limiting example of a vehicle 10 equipped with a tire pressure monitor system, hereafter the system 12. In general, the vehicle is equipped with a plurality of wheels 14. In this non-limiting example, there are four wheels: a first wheel 14A, a second wheel 14B, a third wheel 14C, and a fourth wheel 14D. In this non-limiting example, each of the wheels 14 is equipped with a pressure sensor: a first pressure sensor 16A, a second pressure sensor 16B, a third pressure sensor 16C, and a fourth pressure sensor 16D, thereby forming a plurality ofpressure sensors 16. However, it is contemplated that wheel location of properly equipped wheels may still be determined even if one of the wheels is not properly equipped, as may be the case when a spare tire is being used. In general, the system is configured to record or collect or determine a plurality of pressure values from each of the pressure sensors 16. As used herein, to determine a plurality of pressure values from a pressure sensor means to sample or measure tire pressure on a regular basis in order to generate a signal capable of exhibiting variations 18 (e.g. 18A, 18B, 18C, 18D, 18E, and 18F) over time as illustrated in Figs. 3 and 4. As will be described in more detail below, each of the variations 18 of the pressure values is analyzed or compared in various ways as described herein in order to determine a wheel location (e.g. right front (RF), the right rear (RR), the left-front (LF), and the left-rear (LR)).

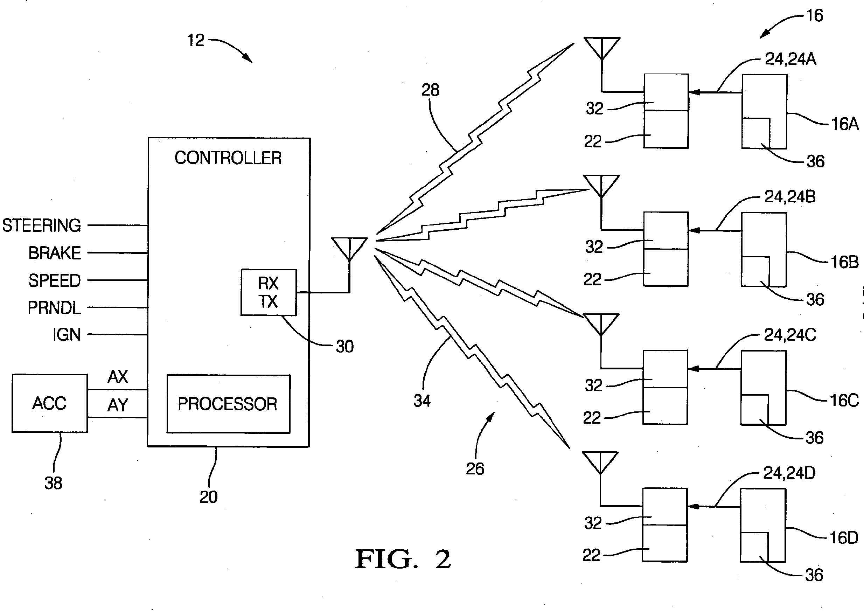

Fig. 2 further illustrates a non-limiting example of the system 12. In general, the system 12 includes a controller 20 configured to receive signals 26 originating from the pressure sensors 16. In one embodiment, the controller 20 may include a processor such as a microprocessor or other control circuitry as should be evident to those in the art. The controller 20 may include memory (not shown), including non-volatile memory, such as electrically erasable programmable read-only memory (EEPROM) for storing one or more routines, thresholds and captured data. The one or more routines may be executed by the processor to perform steps for processing signals received by the controller 20 for determining wheel location as described herein. The content of the signals 26 generally depends on the configuration of the system 12, as is described in the alternative embodiments that follow.

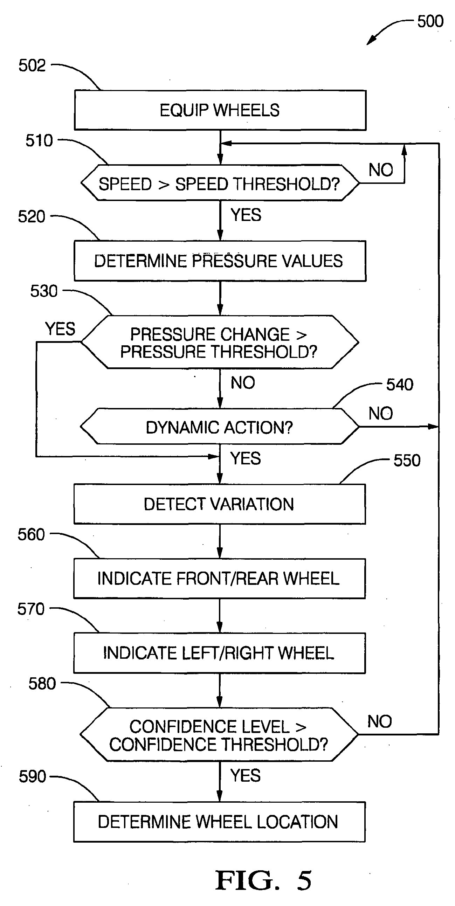

In one embodiment of the system 12, each of the pressure sensors 16 is connected to a processor 22 located in the wheel 14. The processor 22 is generally configured to receive the plurality of pressure values 24 from the pressure sensor 16 to which the processor 22 is connected. The processor 22 may be configured to detect a variation 18 of the pressure values 24. By locating the processor 22 in the wheel 14, the processor 22 can perform some signal analysis of the pressure values 24, and thereby reduce the amount of information communicated by the signals 26. Accordingly, the processor 22 may be configured to determine a variation 18, and transmit a variation signal 28 indicative of the variation 18 of the pressure values 24. It follows that the controller 20 for this configuration of the system 12 would be equipped with a receiver 30 configured to receive the variation signal 28 from each of the processors 22. Accordingly, the controller 20 would also be configured to determine a wheel location based on a comparison of the variation signals 28, as will be described in more detail below and with respect to Figs 5-8.

In an alternative embodiment of the system 12 described above, each pressure sensor 16 may be connected directly to a transmitter 32, and thereby be configured to transmit a pressure signal 34 indicative of or corresponding to the plurality of pressure values 24 from the pressure sensor 16. This configuration differs from that described above in that there is little or no signal processing prior to the signals 26 being transmitted, and so the amount of data communicated by the pressure signal 34 is likely greater than the amount of data communicated by the variation signal 28. An advantage of this configuration is that the cost of the electronics installed in each of the wheels 14 is reduced as the processor 22 is not included in this configuration. It follows that the controller 20 in this configuration may be configured to receive the pressure signal 34 from each transmitter 32, detect a variation 18 of the pressure values 24 communicated by the pressure signal 34, and determine a wheel location based on a comparison of the variations 18.

Tire pressure monitors that require some sort of manual action to identify which location a wheel is on a vehicle (i.e. do not have an automatic wheel location feature) typically measure/transmit pressure values at a relatively low data rate, once per second or slower for example. However, to detect or determine a variation of the pressure values caused by, for example, a rumble strip or pot-hole in the roadway, the data rate will need to be relatively high, greater than once per one-hundred milliseconds for example. If the pressure sensor 16, transmitter 32, and/or processor 22 (if so equipped) operated at the higher data rate at all times, the typical battery used to power the pressure sensor 16 and other devices installed in the wheels 14 would be depleted in an unacceptably short time. A larger battery or a means of recharging the battery may solve the battery life problem, but such measures would have an undesirable increase the cost of components installed in the wheels 14.

To address this problem, one embodiment of the system 12 may use a pressure sensor 16 configured to operate at an increased data rate only while the system 12 is in the process of determining the wheel location. By way of example and not limitation, the wheel 14 or the pressure sensor 16 may be equipped with a centrifugal accelerometer 36 configured to detect rotation of the wheel 14. By way of further example, the system 12 may configured to operate the pressure sensors 16 at the higher data rate to determine the plurality of pressure values 24 from each pressure sensor 16 when the centrifugal accelerometer 36 indicates that the wheel 14 is rotating at a rate greater than a rotation rate threshold, for example a rotational rate corresponding to sixteen kilometers per hour (16kph). This configuration may be preferable if the system 12 utilizes a one-way communication scheme, that is where signals 26 only go from the wheel 14 to the controller 20. For this configuration the electronics (e.g. - pressure sensor 16, transmitter 32, centrifugal accelerometer 36) mounted in the wheel 14 may autonomously increase the data rate of the pressure values 24 for a period of time (e.g. 5 minutes) when the wheel 14 starts rotating after being still (e.g. vehicle parked) for a longer period of time (e.g. 30 minutes).

Alternatively, if the system utilizes a two-way communication scheme, that is signals 26 also go from the controller 20 to the wheel 14, then the controller 20 may be configured to transmit a signal to the pressure sensor 16 and associated electronics when the controller 20 determines it is a proper time to determine the location of the wheels 14. In one embodiment where two-way communication is utilized, the system 12 may include a linear accelerometer 38 configured to detect longitudinal acceleration (AX) and lateral acceleration (AY) of the vehicle 10. The linear accelerometer may be incorporated into the controller 20, or may be already available elsewhere on the vehicle 10, such as part of a crash detection system. If the linear accelerometer 38 is used, the system 12 may be configured to determine the wheel location when the linear accelerometer detects a dynamic action of the vehicle. As used herein, a dynamic action of the vehicle is anything that suggests suitable vehicle operating conditions to produce the variation 18 of the pressure values 24 that may be useful to determine a wheel location (RF, RR, LF, LR) of the wheels 14. By way of example and not limitation, examples of a dynamic action include steering maneuvers, vehicle acceleration, and vehicle braking. Other events that may indicate to the controller 20 that suitable vehicle operating conditions for determining a wheel location exist may include, but are not limited to, detecting a change in the gear selection (PRNDL), a change in steering angle (STEERING), an activation of brakes of the vehicle (BRAKE), a change in speed of the vehicle (SPEED), or starting of the engine of the vehicle (IGN).

Figs. 3 and 4 illustrate non-limiting examples of situations that may cause a variation 18 of the pressure values 24 suitable to use for determining a wheel location (RF, RR, LF, LR) of the wheels 14. Fig. 3 illustrates the vehicle 10 approaching an object 40 in the travel path of the vehicle. In this example, the object 40 may be a rock, stick, pipe, rumble strip, or any object that protrudes above the surface of the roadway that will initially cause a transient increase in the tire pressure as the wheel 14 passes over the object 40. Other objects that may cause a variation include depressions in the roadway such as holes, commonly called pot-holes. Fig. 3 also illustrates a first pressure signal 24A from the first wheel 14A, and a second pressure signal 24B from the second wheel 14B. Note that the first variation 18A is similar to the second variation 18B, but the variations are separated in time by a time interval TI. It should be recognized that the time interval TI is a function of or is proportional to a ratio of a wheelbase of the vehicle 10 to a speed of the vehicle 10. The details of how the first variation 18A and the second variation 18B are compared as part of determining a wheel location is describe in more detail below with regard to Figs. 5-8.

Fig. 4 illustrates the vehicle 10 executing a left turn. Centripetal force causes the wheels on the outside of the turn (wheel 14A and wheel 14B) to experience a temporary increase in load and thereby exhibit a temporary increase in tire pressure. Likewise, the wheels on the inside of the turn (wheel 14C and 14D) exhibit a temporary decrease in tire pressure. Once the turn is complete the tire pressures return to normal. Fig. 4 also illustrates the first pressure signal 24A from the first wheel 14A, the second pressure signal 24B from the second wheel 14B, the third pressure signal 24C from the third wheel 14C, and the fourth pressure signal 24D from the fourth wheel. In the descriptions of Figs 5-8 that follow, the variation of the these pressure signals are referred to as the third variation 18C, the fourth variation 18D, the fifth variation 18E, and the sixth variation 18F.

Fig. 5 illustrates a non-limiting example of a method 500 of operating a tire pressure monitor system (the system 12) on a vehicle 10 to determine a wheel location (RF, RR, LF, LR) of wheels 14 equipped with pressure sensors 16.

Step 502, EQUIP WHEELS, may include equipping a plurality of wheels 14 with a pressure sensor 16, a processor 22, a transmitter 32, a centrifugal accelerometer 36, a battery (not shown) and/or other devices know to those in the art for monitoring tire pressure of a wheel.

Step 510, SPEED > SPEED THRESHOLD?, is an optional step that may include the centrifugal accelerometer 36 detecting that a rotational rate of the wheel is greater than a rotational rate threshold that corresponds to, for example, the vehicle 10 traveling at 10kph. Alternatively, the controller 20 may detect that the a speed signal (SPEED) indicates that the vehicle is traveling faster than a speed threshold of, for example, 10kph.

Step 520, DETERMINE PRESSURE VALUES, may include determining a plurality of pressure values from each pressure sensor by configuring or operating the pressure sensor at a higher than typical data rate, two hundred samples per second as opposed to one sample per second, for example. Increasing the data rate may be necessary to accurately detect a variation 18 of the tire pressure.

Step 530, PRESSURE CHANGE > PRESSURE THRESHOLD?, is an optional step that may include the processor 22 analyzing the pressure values 24, or the controller 20 analyzing the signals 26, 28, or 34 to determine that a pressure change large enough to be useful for determining a wheel location has occurred. It should be appreciated that the pressure change may be positive or negative, and so the determination that the pressure change is greater than the pressure threshold is based on a comparison of absolute values. By way of example and not limitation, a suitable value for the pressure threshold is one kilo-Pascal (lkPa) above nominal pressure. This allows the wheel locations to be assigned even if the nominal pressure of each tire is different since the variations indicate changes in tire pressure. However, it should be appreciated that the threshold should be selected based on tire design, vehicle weight, and other factors known to those in the art, and may be selected by way of empirical testing. If the pressure change is greater than the pressure threshold (YES), the variation 18 may have sufficient signal strength relative to signal noise to be useful to determine a location of a wheel 14, and so the method 500 proceeds to step 550. If the pressure change is not greater than the pressure threshold (NO), the variation may not have sufficient signal strength relative to signal noise to be useful to determine a location of a wheel 14, and so the method 500 proceeds to optional step 540 to determine if a dynamic action has been detected. If the system is not configured to detect a dynamic action as described elsewhere herein, a NO result may direct the method 500 to step 510.

Step 540, DYNAMIC ACTION?, is an optional step that may include the controller 20 monitoring various signals such as, but not limited to, signals from the linear accelerometer 38, a steering angle sensor (STEERING), a vehicle brake system (BRAKE), or other signals from the vehicle 10 shown in Fig. 2. If a dynamic action is detected (YES), the variation 18 may have sufficient signal strength relative to any signal noise to be useful to determine a location of a wheel 14, and so the method 500 proceeds to step 550. If the dynamic action is detected (NO), the variation may not have sufficient signal strength relative to signal noise to be useful to determine a location of a wheel 14, and so the method 500 proceeds to step 510 to determine if the vehicle 10 is still moving.

Step 550, DETECT VARIATION, may include detecting a variation 18 of the pressure values 24 from a plurality of pressure sensors 16. As used herein, a variation is comparable to a perturbation or change in the nominal value of pressure values 24 that corresponds to a change in the tire pressure arising from, for example, the tire running over an object 40 or pot-hole in the roadway, or the vehicle 10 executing a turn. Non-limiting examples of variation 18 that may be suitable for determining a wheel location are depicted in Figs. 3 and 4. Detecting the variation 18 may include analyzing or filtering a sampled group of pressure values 24 to, for example, determine a magnitude, polarity, duration, characteristic frequency, or other characteristic of the variation 18.

Step 560, INDICATE FRONT/REAR WHEEL, may include indicating that a wheel 14 is at a front location (e.g. LF or RF) or a rear location (e.g. LR or RR) based on a comparison of two of the variations 18. For example, indicating a front location for the first wheel 14A and indicating a back location for a second wheel 14B when a first variation 18A of pressure values 24A is determined for the first wheel 14A and second variation 18B of pressure values 24B is determined for the second wheel 14B, wherein the first variation 18A and the second variation have similar polarities, and the second variation 18B occurs a time interval TI after the first variation 18B. As used herein, similar polarities means that at least the initial change of the variations 18 being compared is in the same direction, as shown in Fig. 3.

The variations 18A and 18B further suggest that the object 40 may have been large enough for the wheels 14 to have been momentarily unloaded, and so the initial increase in the pressure values 24A and 24B is followed by a momentary decrease below the nominal pressure values. Running over smaller objects may not produce the negative portion of the signal shown in the first variation 18A and the second variation 18B. Since the wheels 14A and 14B run over the same object 40, the variations 18A and 18B are similar, but shifted in time by an amount (the time interval TI) that is proportional to a ratio of a wheelbase of the vehicle 10 to a speed (SPEED) of the vehicle 10. The value of the time interval TI may be estimated based on the SPEED received by the controller 20, and a wheel base value recalled from memory in the controller. Alternatively, if the controller does not receive SPEED, the first variation 18A and the second variation 18B may be compared using convolution to determine TI and determine if the variations are similar.

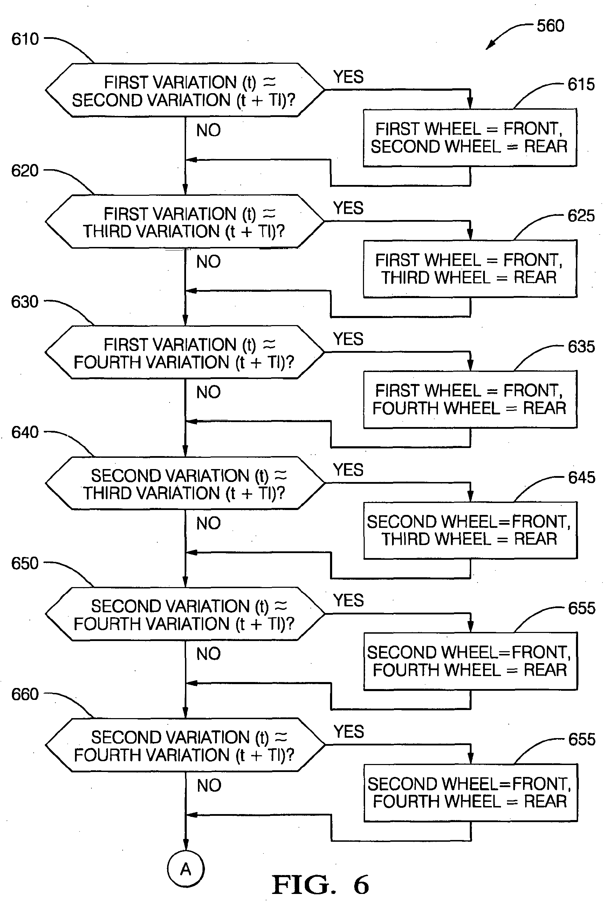

Fig. 6 shows a more detailed example of step 560 that may be used to determine if a wheel is at a front location or a rear location. Steps 610, 620, 630, 640, 650, and 660 are a partial list of comparisons that could be made to determine if a wheel is at front location or a rear location. Steps 615, 625, 635, 645, 655, and 665 illustrate the indications assigned to a wheel if the outcome of the prior step is YES. It is recognized that additional comparison steps would need to be made to make a complete determination. For example, a reverse of step 610 that applies the time interval TI to the first variation 18A and compares it to the second variation 18B without the timer interval TI to indicate that the first wheel 14A is actually in the rear, and the second wheel 14B is actually in the front is needed to make a complete determination.

Returning to Fig. 5, step 570, INDICATE LEFT/RIGHT WHEEL, may include indicating that a wheel 14 is at a left location (e.g. LF or LR) or a right location (e.g. RF or RR) based on a comparison of two of the variations 18. For example, indicating a right location for the first wheel 14A and a left location for the third wheel 14C when a third variation 18C of pressure values 24C is determined for the first wheel and a fifth variation 18E of pressure values 24E is determined for the third wheel 14C, wherein the third variation 18C and the fifth variation 18E have opposite polarities. When the vehicle 10 executes a left turn, the centripetal force generated by the wheels to counter the centrifugal force generated by the vehicle 10 increases the load on the right side wheels 14A and 14B, and correspondingly decreases the load on the left side wheels 14C and 14D. As such, the pressure in each tire varies as suggested by the variations 18C, 18D, 18E, and 18F.

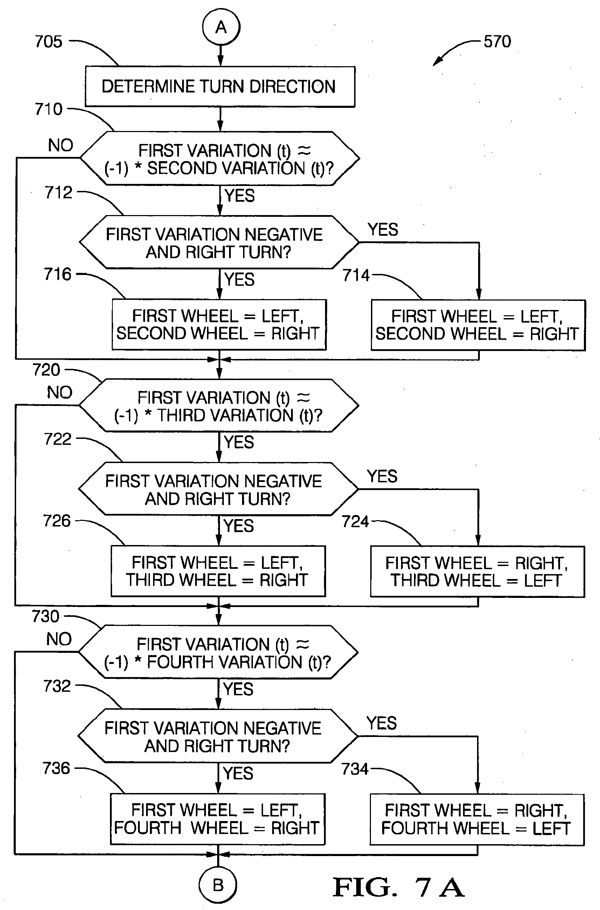

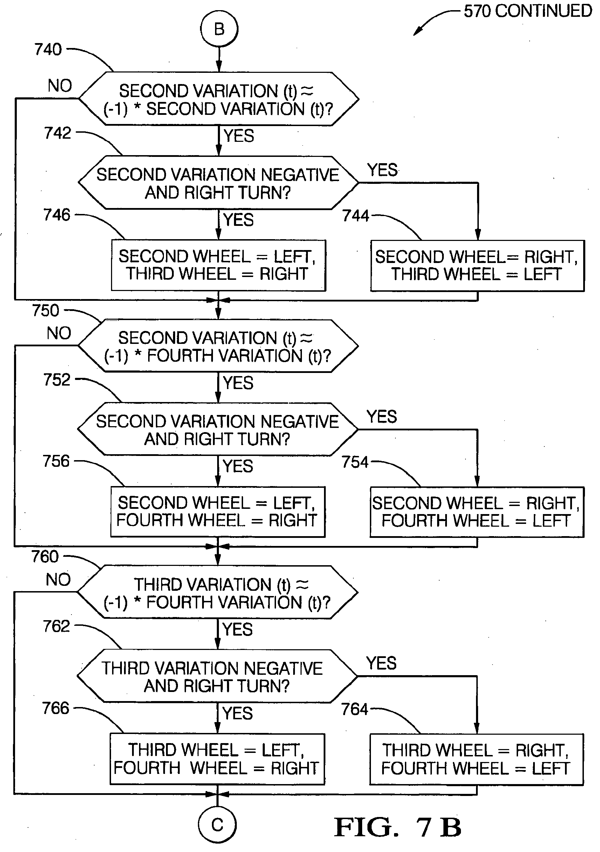

Figs. 7A and 7B show a more detailed example of step 570 that may be used to determine if a wheel is at a left location or a right location. Steps 710, 720, 730, 740, 750, and 760 are a list of comparisons that could be made to determine if a wheel is at left location or a right location. Steps 714, 724, 734, 744, 754, and 764 illustrate the indications assigned to a wheel if the outcome of the corresponding prior step 712, 722, 732, 742, 752, and 762 is YES. Steps 716, 726, 736, 746, 756, and 766 illustrate the indications assigned to a wheel if the outcome of the corresponding prior step 712, 722, 732, 742, 752, and 762 is NO.

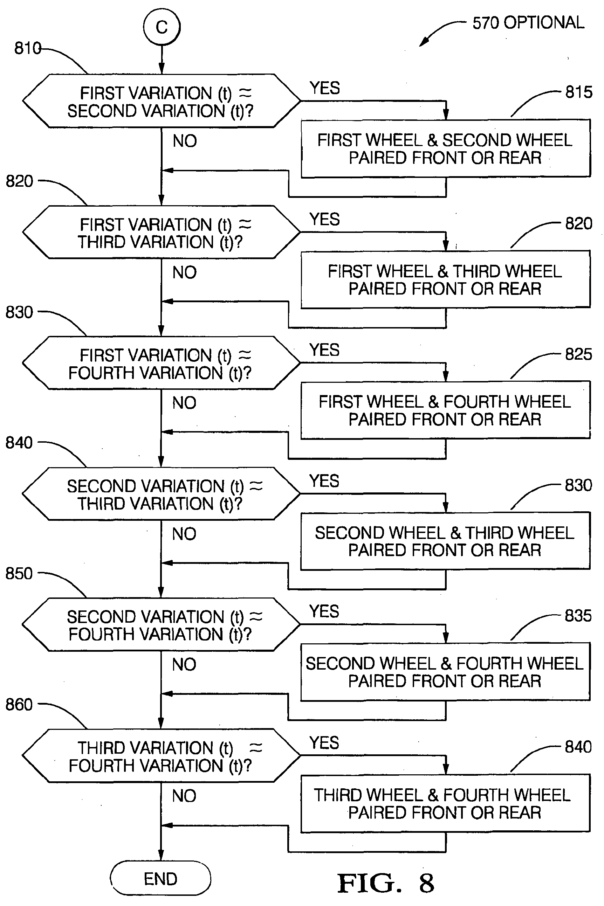

Fig. 8 illustrates an optional portion of step 570 that may be executed to help with determining if a wheel 14 is in a front location or a rear location as the steps shown in Fig. 8 pair wheels. For example, the first wheel 14A and the third wheel 14C are both indicated as one of a front location and a back location if the third variation 18C and the fifth variation 18E occur at substantially the same time, for example a time interval TI (not shown in Fig. 4) is less than one hundred milliseconds (100ms). The decisions steps 810, 820, 830, 840, 850, and 860 and the corresponding assignment steps 815, 825, 835, 845, 855, and 865 that follow each of the decision steps may be executed as shown.

Step 580, CONFIDENCE LEVEL > CONFIDENCE THRESHOLD? , may include accumulating or tallying scores for each of the wheels 14 with regard to the indications made in the prior steps. It is recognized that if the object 40 is small, and/or a turn made by the vehicle is relatively gentle, determining a wheel location based on a single group of variations 18 arising from a single event may not be reliable. As such, the controller 20 may be configured to accumulate or tally scores for each of the wheels 14 as multiple events are detected and the variations 18 compared until, for example, all of the wheels have been indicated consistently as front or rear and left or right a plurality of times, five for example. Such an accumulating or tallying of scores may include incrementing and decrementing a counter associated with the front/rear indication and the left/right indication for each wheel 14. If the confidence level for all of the wheels is less than the confidence threshold (e.g. 5), the method 500 may be repeated until the confidence level for all of the wheels exceeds the confidence threshold.

Step 590, DETERMINE WHEEL LOCATION, may include determining a wheel location (RF, RR, LF, LR) based on a comparison of the variations 18 of the pressure values 24. Step 590 may include updating information displayed to an operator of the vehicle 10, and/or momentarily notifying the operator that a change of the wheel locations has been made. Such a notification may be preferred so that the operator knows that the wheel locations have been updated after, for example, having the wheels 14 rotated as part of a maintenance routine, or having the tires replaced.

Accordingly, a tire pressure monitor system (the system 12), a controller 20 for the system 12 and a method 500 of operating a tire pressure monitor system on a vehicle to determine a wheel location of wheels equipped with pressure sensors is provided. The system 12 and method 500 provide a means for automatic learning of the wheel locations, and thereby avoids the sometimes frustrating or inaccurate practice of manually updating the wheel location after maintenance is performed that changes the wheel locations.

## Claims

1. A method (500) of operating a tire pressure monitor system (12) on a vehicle (10) to determine a wheel location of wheels (14) equipped with pressure sensors (16), said method (500) comprising:
equipping (502) a plurality of wheels (14) with a pressure sensor (16);
determining (520) a plurality of pressure values (24) from each pressure sensor (16);
detecting (550) a variation (18) of the pressure values (24) from a plurality of pressure sensors (16); and
determining (590) a wheel location based on a comparison of the variations (18) of the pressure values (24) **characterized in that** the step of determining (590) the wheel location includes indicating (615) a front location for a first wheel (14A) and indicating a back location for a second wheel (14B) when (610) a first variation (18A) of pressure values (24) is determined for the first wheel (14A) and second variation (18B) of pressure values (24) is determined for the second wheel (14B), wherein the first variation (18A) and the second variation (18B) have similar polarities, and the second variation (18B) occurs a time interval (T1) after the first variation (18A).

2. The method (500) in accordance with claim 1, wherein detecting (550) a variation (18) of the pressure values (24) includes detecting (530) a pressure change greater than a pressure threshold.

3. The method (500) according to any one of the preceding claims, wherein the method (500) further comprises
detecting a dynamic action of the vehicle (10).

4. The method (500) in accordance with claim 3, wherein the dynamic action is detected by an accelerometer configured to detect longitudinal acceleration and lateral acceleration of the vehicle (10).

5. The method (500) according to any one of claims 3 or 4, wherein the step of detecting a variation (18) of the pressure values (24) is initiated when a dynamic action is detected

6. A tire pressure monitor system (12) on a vehicle (10) configured to determine a wheel location of wheels (14) equipped with pressure sensors (16), said system (12) comprising:
a plurality of wheels (14) equipped with a pressure sensor (16), wherein the system (12) is configured to determine a plurality of pressure values (24) from each pressure sensor (16), detect a variation (18) of the pressure values (24), and determine a wheel location based on a comparison of the variations (18) of the pressure values (24), **characterized in** being configured to indicate (615) a front location for a first wheel (14A) and a back location for a second wheel (14B) when (610) a first variation (18A) of pressure values (24) is determined for the first wheel (14A) and second variation (18B) of pressure values (24) is determined for the second wheel (14B), wherein the first variation (18A) and the second variation (18B) have similar polarities, and the second variation (18B) occurs a time interval (T1) after the first variation (18A).

## Patentansprüche

1. Verfahren (500) für einen Betrieb eines Reifendruck-Überwachungssystems (12) an einem Fahrzeug (10), um eine Radposition von Rädern (14) zu bestimmen, die mit Drucksensoren (16) ausgestattet sind, wobei das Verfahren (500) aufweist:
Ausstatten (502) einer Vielzahl von Rädern (14) mit einem Drucksensor (16);
Bestimmen (520) einer Vielzahl von Druckwerten (24) von jedem Drucksensor (16);
Erfassen (550) einer Variation (18) der Druckwerte (24) von einer Vielzahl von Drucksensoren (16); und
Bestimmen (590) einer Radposition basierend auf einem Vergleich der Variationen (18) der Druckwerte (24), **dadurch gekennzeichnet, dass** der Schritt des Bestimmens (590) der Radposition ein Angeben (615) einer vorderen Position für ein erstes Rad (14A) und ein Angeben einer hinteren Position für ein zweites Rad (14B) umfasst, wenn (610) eine erste Variation (18A) von Druckwerten (24) für das erste Rad (14A) bestimmt wird und eine zweite Variation (18B) von Druckwerten (24) für das zweite Rad (14B) bestimmt wird, wobei die erste Variation (18A) und die zweite Variation (18B) ähnliche Polaritäten haben und die zweite Variation (18B) ein Zeitintervall (T1) nach der ersten Variation (18A) stattfindet.

2. Das Verfahren (500) gemäß Anspruch 1, wobei das Erfassen (550) einer Variation (18) der Druckwerte (24) ein Erfassen (530) einer Druckänderung umfasst, die größer als eine Druckschwelle ist.

3. Das Verfahren (500) gemäß einem der vorhergehenden Ansprüche, wobei das Verfahren (500) weiter ein Erfassen einer dynamischen Aktion des Fahrzeugs (10) aufweist.

4. Das Verfahren (500) gemäß Anspruch 3, wobei die dynamische Aktion durch einen Beschleunigungsmesser erfasst wird, der konfiguriert ist zum Erfassen einer Längsbeschleunigung und einer Querbeschleunigung des Fahrzeugs (10).

5. Das Verfahren (500) gemäß einem der Ansprüche 3 oder 4, wobei der Schritt des Erfassens einer Variation (18) der Druckwerte (24) initiiert wird, wenn eine dynamische Aktion erfasst wird.

6. Ein Reifendruck-Überwachungssystem (12) an einem Fahrzeug (10), das konfiguriert ist zum Bestimmen einer Radposition von Rädern (14), die mit Drucksensoren (16) ausgestattet sind, wobei das System (12) aufweist:
eine Vielzahl von Rädern (14), die mit einem Drucksensor (16) ausgestattet sind, wobei das System (12) konfiguriert ist zum Bestimmen einer Vielzahl von Druckwerten (24) von jedem Drucksensor (16), Erfassen einer Variation (18) der Druckwerte (24) und Bestimmen einer Radposition basierend auf einem Vergleich der Variationen (18) der Druckwerte (24), **dadurch gekennzeichnet, dass** es konfiguriert ist zum Angeben (615) einer vorderen Position für ein erstes Rad (14A) und einer hinteren Position für ein zweites Rad (14B), wenn (610) eine erste Variation (18A) von Druckwerten (24) für das erste Rad (14A) bestimmt wird und eine zweite Variation (18B) von Druckwerten (24) für das zweite Rad (14B) bestimmt wird, wobei die erste Variation (18A) und die zweite Variation (18B) ähnliche Polaritäten haben und die zweite Variation (18B) ein Zeitintervall (T1) nach der ersten Variation (18A) stattfindet.

## Revendications

1. Procédé (500) pour le fonctionnement d'un système de surveillance de pression de pneumatique (12) sur un véhicule (10) pour déterminer un emplacement des roues (14) équipées de capteurs de pression (16),
ledit procédé (500) comprenant les étapes consistant à :
équiper (502) une pluralité de roues (14) avec un capteur de pression (16) ;
déterminer (520) une pluralité de valeurs de pression (24) depuis chaque capteur de pression (16) ;
détecter (550) une variation (18) des valeurs de pression (24) depuis une pluralité de capteurs de pression (16) ; et
déterminer (590) un emplacement d'une roue en se basant sur une comparaison des variations (18) des valeurs de pression (24),
**caractérisé en ce que**
l'étape de détermination (590) de l'emplacement de roue inclut d'indiquer (615) un emplacement avant pour une première roue (14A) et d'indiquer un emplacement arrière pour une seconde roue (14B) quand (610) une première variation (18A) des valeurs de pression (24) est déterminée pour la première roue (14A) et une seconde variation (18B) des valeurs de pression (24) est déterminée pour la seconde roue (14B), dans lequel la première variation (18A) et la seconde variation (18B) ont des polarités similaires, et la seconde variation (18B) se produit à un intervalle temporaire (TI) après la première variation (18A).

2. Procédé (500) selon la revendication 1, dans lequel la détection (550) d'une variation (18) des valeurs de pression (24) inclut la détection (530) d'un changement de pression plus grand qu'un seuil de pression.

3. Procédé (500) selon l'une quelconque des revendications précédentes, dans lequel le procédé (500) comprend en outre :
la détection d'une action dynamique du véhicule (10).

4. Procédé (500) selon la revendication 3, dans lequel l'action dynamique est détectée par un accéléromètre configuré pour détecter l'accélération longitudinale et l'accélération latérale du véhicule (10).

5. Procédé (500) selon l'une quelconque des revendications 3 ou 4, dans lesquels l'étape consistant à détecter une variation (18) des valeurs de pression (24) est commencée quand une action dynamique est détectée.

6. Système de surveillance de pression de pneumatique (12) sur un véhicule (10), configuré pour déterminer un emplacement des roues (14) équipées de capteurs de pression (16), ledit système (12) comprenant :
une pluralité de roues (14) équipées d'un capteur de pression (16), dans lequel le système (12) est configuré pour déterminer une pluralité de valeurs de pression (24) depuis chaque capteur de pression (16), pour détecter une variation (18) des valeurs de pression (24), et pour déterminer un emplacement de roue sur la base d'une comparaison des variations (18) des valeurs de pression (24), **caractérisé en ce qu'**il est configuré pour indiquer (615) un emplacement avant pour une première roue (14A) et un emplacement arrière pour une seconde roue (14B) quand (610) une première variation (18A) des valeurs de pression (24) est déterminée pour la première roue (14A) et une seconde variation (18B) des valeurs de pression (24) est déterminée pour la seconde roue (14B), dans lequel la première variation (18A) et la seconde variation (18B) ont des polarités similaires, et la seconde variation (18B) se produit à un intervalle temporel (T) après la première variation (18A).
